# FASCICULE DE BREVET EUROPEEN

(11) **EP 3 652 711 B1**
(45) Date de publication et mention de la délivrance du brevet: **11.09.2024**
(21) Numéro de dépôt: 18745850.0
(22) Date de dépôt: 13.07.2018
(51) Int. Cl.: G06Q 10/02, G06Q 20/18, G06Q 20/30, G06Q 20/40, G06Q 50/06

(54) **PROCÉDÉ D'EXPLOITATION DE BORNES ÉLECTRIQUES**
VERFAHREN ZUR VERWENDUNG ELEKTRISCHER PUNKTE
METHOD FOR USING ELECTRIC POINTS

(30) Priorité: 13.07.2017 FR 1756669
(43) Date de publication de la demande: 20.05.2020
(73) Titulaire: All In Factory, 91690 Saclas (FR)
(72) Inventeur: LEPAGE, Marc, 91690 Saclas (FR)
(74) Mandataire: Cabinet Nony
(86) Numéro de dépôt international: PCT/EP2018/069102
(87) Numéro de publication internationale: WO 2019/012115

(56) Documents cités:
- FR-A1- 2 968 810
- US-A1- 2016 065 269
- US-A1- 2016 284 143

## Description

### Domaine technique

L'invention concerne un procédé d'exploitation d'un parc de bornes électriques destinées au rechargement d'un ensemble des véhicules électriques. L'invention concerne également une borne électrique adaptée à la mise en oeuvre d'un procédé selon l'invention.

### Etat de la technique

Le développement des véhicules électriques est limité par les difficultés actuelles pour recharger les batteries des véhicules. En particulier, le conducteur d'un véhicule électrique n'est jamais certain de pouvoir disposer d'une borne de recharge lorsqu'il effectue un long voyage.

Pour tenter de résoudre ce problème, des sites internet mettent à disposition les adresses de bornes électriques de rechargement. Le nombre de bornes référencées est cependant limité. En outre, le conducteur ne sait pas toujours si la borne de recharge qu'il a l'intention d'utiliser sera disponible au moment voulu.

Enfin, dans les zones « blanches » non couvertes par le réseau de téléphonie mobile de type GSM, le conducteur peut rencontrer des difficultés pour réserver une borne.

Il existe donc un besoin pour une solution, au moins partielle, à ces problèmes.

Un objectif de l'invention est de répondre à ce besoin.

FR 2 968 810 A1 divulgue un procédé de gestion du rechargement des batteries de véhicules électriques auprès de bornes de recharge publiques.

US 2016/284143 A1 divulgue un procédé permettant à un téléphone intelligent ou à tout terminal de réserver et d'activer un chargeur de véhicule électrique au moyen d'un site web ou d'un système informatique serveur.

US 2016/065269 A1 divulgue un un dispositif d'alimentation électrique sans contact apte à communiquer sans fil avec un dispositif de réception d'énergie et conçu pour transmettre sans contact de l'énergie au dispositif de réception d'énergie.

### Résumé de l'invention

L'invention propose un procédé d'exploitation d'un parc de bornes destinées au rechargement en énergie électrique d'un ensemble des véhicules automobiles, le procédé comportant les étapes successives suivantes :
a) réservation, par un véhicule, auprès d'une centrale de réservation, de préférence au moyen du réseau téléphonique hertzien, suivant les étapes suivantes :
   a1) demande de réservation de ladite borne, par le véhicule, auprès de la centrale, la demande de réservation fixant des contraintes ;
   a2) vérification par la centrale, dans un planning, de la disponibilité d'une borne répondant aux dites contraintes ;
   a3) si une borne répondant aux contraintes est disponible, transmission, par la centrale au véhicule, d'une réponse positive comportant des données d'accès à la borne, mise à jour du planning et enregistrement des données d'accès dans une mémoire du véhicule ; sinon, transmission, par la centrale au véhicule, d'une réponse négative à la demande de réservation ;
b) si le véhicule a reçu une réponse positive à la demande de réservation, lorsque le véhicule est à moins de 100 m, de préférence moins de 50 m, voire moins de 10 m de la borne, demande d'accès, par le véhicule à la borne, la demande d'accès comportant les étapes successives suivantes :
   b1) transmission des données d'accès, du véhicule à la borne ;
   b2) vérification des données d'accès par la borne ;
   b3) si les données d'accès sont valides, fourniture, par la borne, d'un accès à de l'énergie électrique disponible sur un socle de prise de la borne ; sinon, transmission, de la borne au véhicule, d'un refus d'accès ;
c) en fin de chargement, transmission de données de chargement, de la borne au véhicule, et enregistrement des données de chargement dans la mémoire du véhicule ;
d) transmission des données de chargement du véhicule à la centrale.

De manière remarquable, la communication entre le véhicule et la borne à l'étape b) et de préférence à l'étape c) est une communication électromagnétique locale, c'est-à-dire qui n'est possible que lorsque le véhicule est à proximité de la borne, par exemple à moins de 100 m, de préférence moins de 50 m, voire moins de 10 m de la borne.

Une communication électromagnétique locale permet une communication directe entre la borne et le véhicule, sans avoir recours à un relai de transmission. Généralement, elle ne nécessite pas d'abonnement. La communication électromagnétique locale est de préférence Bluetooth^{®}.

Avantageusement, la communication entre le véhicule et la borne est donc possible même lorsque la borne est localisée dans une zone blanche, par exemple dans un parking souterrain ou dans une région isolée.

Le procédé permet en outre une mise à jour du planning de la centrale, par des moyens radiophoniques sans fil classiques, dès que le véhicule rejoint une zone autorisant une telle communication, par exemple lorsqu'il sort du parking souterrain.

Le procédé peut notamment encore comporter une ou plusieurs des caractéristiques optionnelles suivantes :
- la communication électromagnétique locale est à une fréquence comprise entre 2400 et 2500 MHz ;
- la communication électromagnétique locale est une communication Bluetooth^{®} ;
- à l'étape a), la réservation de la borne auprès de la centrale de réservation est effectuée au moyen du réseau téléphonique hertzien ;
- la borne est localisée dans une zone blanche non couverte par un réseau de téléphonie mobile ;
- le parc de bornes comporte plus de 5 000 bornes ;
- à l'étape a), l'identification d'une borne pour satisfaire la demande de réservation dépend
   - d'une contrainte relative à l'emplacement géographique de la borne, et
   - d'une contrainte relative au moment du rechargement de batterie du véhicule ;
- l'identification d'une borne pour satisfaire la demande de réservation dépend encore
   - d'une contrainte relative à un niveau de charge des batteries du véhicule au moment où la centrale évalue que le véhicule arrivera à la borne, et/ou
   - d'une contrainte relative à un niveau de charge demandé par le véhicule en fin du rechargement ;
- à l'étape a), si la centrale ne trouve pas de borne répondant à la demande de réservation, la centrale propose des modifications d'au moins une contrainte fixée par la demande de réservation ;
- la centrale génère un code d'accès à chaque demande de réservation, et la borne est configurée pour contrôler la validité du code d'accès reçu du véhicule ;
- la centrale informe le véhicule d'autres demandes de réservation de la borne réservée par le véhicule.

Dans des aspects qui ne font pas partie de l'objet revendiqué, l'invention concerne également une borne de rechargement électrique comportant :
- un socle de prise adapté à la fourniture d'énergie électrique à un véhicule électrique ;
- un boîtier fixe par rapport au sol, de préférence fixé sur le sol ;
- un support sur lequel le socle de prise est fixé ou intégré, mobile par rapport au boîtier ;
- un module de commande de la position du support par rapport au boîtier,
le support étant mobile entre une position protégée et une position exposée dans lesquelles l'accès au socle de prise, depuis l'extérieur du boîtier, est fermé et ouvert, respectivement.

La borne peut notamment encore comporter une ou plusieurs des caractéristiques optionnelles suivantes :
- le boîtier comporte une ouverture obturée dans la position protégée et définissant un accès au socle de prise dans la position exposée ;
- le support est mobile sur le boîtier entre les positions protégée et exposée ;
- le support est agencé de manière à obturer l'ouverture dans la position exposée ;
- le support est mobile en rotation, sur le boîtier, autour d'un axe X, entre les positions protégée et exposée ;
- le support est agencé de manière à obturer l'ouverture quelle que soit la position angulaire du support par rapport au boîtier ;
- en position protégée, le socle de prise est séparé de l'environnement extérieur par un bouclier de protection contre les chocs ;
- le bouclier s'étend, au moins en partie, à l'opposé du socle de prise par rapport à l'axe X de rotation du support ;
- dans la position protégée, le socle de prise est écarté de la surface extérieure du boîtier exposée à l'environnement lorsque le boîtier est fixé sur le mur ou sur le sol, d'une distance supérieure à 2 cm, de préférence supérieure à 5 cm ;
- le module de commande comporte un émetteur récepteur apte à dialoguer en Bluetooth^{®} ;
- la borne comporte un appareil d'acquisition d'images commandé par le module de commande ;
- l'appareil d'acquisition d'images est fixé sur le support, le module de commande étant configuré pour commander les moyens d'entraînement de manière à déplacer l'appareil d'acquisition entre une position d'acquisition et une position rangée dans lesquelles l'objectif de l'appareil d'acquisition est exposé et isolé de l'environnement extérieur au boîtier, respectivement.

### Brève description des figures

D'autres caractéristiques et avantages de l'invention apparaitront encore à la lecture de la description détaillée qui va suivre et à l'examen détaillé du dessin dans lequel :
- la figure 1 représente schématiquement un système dans lequel un procédé selon l'invention peut être mis en oeuvre ; et
- la figure 2 illustre schématiquement, en perspective, une borne selon l'invention dans une position protégée (figures 2a et 2b), dans une position d'acquisition d'un appareil d'acquisition d'images (figures 2c et 2d), et dans une position exposée (figures 2e et 2f).

### Définitions

Par « véhicule », on entend ici l'engin roulant, mais également son contenu. Lorsque le conducteur est à bord, son téléphone mobile est donc considéré comme faisant partie du véhicule.

L'engin roulant peut être non seulement un véhicule léger, comme une voiture, un scooter ou une moto, mais également un véhicule industriel, ce qui comprend notamment les poids lourds, les véhicules de transport en commun et les véhicules agricoles.

### Description détaillée

### Procédé

Le parc comporte une pluralité de véhicules 10, de préférence plus de 500, de préférence plus de 1 000, de préférence plus de 10 000 véhicules, susceptibles de se recharger sur une pluralité de bornes électriques 12 dispersées sur un territoire, de préférence plus de 500, de préférence plus de 1 000, de préférence plus de 5 000, de préférence plus de 10 000 bornes. En particulier, les bornes 12 peuvent être des bornes installées chez des particuliers, dans des zones blanches, ou dans des parkings souterrains inaccessibles au réseau de téléphonie mobile.

**A l'étape a)**, le véhicule 10 demande une réservation de l'accès à la borne 12 auprès d'une centrale de réservation 14, commune à l'ensemble des bornes.

A cet effet, le véhicule 10 envoie, par exemple la veille du trajet, de préférence par le réseau de téléphonie mobile, en particulier le réseau GSM, une demande de réservation DEM. L'émetteur du véhicule utilisé peut être en particulier un téléphone mobile, par exemple appartenant au conducteur du véhicule, ou un téléphone intégré dans le véhicule 10.

La demande de réservation DEM comporte une information VEH relative au véhicule, et fixe des contraintes pour le rechargement, et notamment
- une contrainte GEO déterminant l'emplacement géographique auquel le véhicule souhaite procéder au rechargement de ses batteries, et
- une contrainte HOR déterminant le moment auquel il souhaite procéder au rechargement de ses batteries.

VEH comporte de préférence un identifiant du véhicule ID-Véh, mais également, de préférence, des informations relatives à des caractéristiques techniques du véhicule, comme la nature et la capacité de ses batteries.

GEO peut être par exemple l'identification d'une borne particulière, mais aussi une ville ou des coordonnées géographiques définissant un secteur géographique dans lequel le véhicule souhaite effectuer le rechargement de ses batteries.

HOR peut être une date, une heure de début de chargement ou une plage horaire de rechargement. Par exemple, le véhicule peut demander un rechargement « dès que possible ».

Optionnellement, la demande de réservation DEM peut également contenir une contrainte relative au niveau de charge des batteries NIV_déb au moment où le véhicule 10 arrivera à la borne 12. Cette contrainte peut être par exemple obtenue en indiquant le niveau actuel de charge, les trajets prévus jusqu'au rechargement et/ou la capacité résiduelle des batteries du véhicule.

Optionnellement, la demande de réservation DEM peut également comporter une contrainte relative au niveau de charge que le véhicule souhaite atteindre à la fin du rechargement NIV _fin. Par exemple, la demande de réservation peut indiquer que le véhicule souhaite une recharge complète de ses batteries ou une recharge lui permettant de rouler un nombre minimal de kilomètres.

A l'étape a2), la centrale 14 traite ensuite la demande de réservation DEM.

Plus précisément, la centrale 14 gère un planning 16. La centrale 14 recherche une borne 12 susceptible de répondre à la demande de réservation, c'est-à-dire notamment située à un emplacement compatible avec la demande de réservation et capable de fournir l'énergie demandée dans la plage horaire souhaitée.

Si le véhicule n'a pas indiqué une borne particulière, la centrale 14 recherche une borne répondant au mieux à la demande de réservation. La détermination de la borne résulte en particulier des contraintes géographiques posées et de la capacité à fournir l'énergie souhaitée dans les plages horaires souhaitées. Si la centrale 14 ne trouve pas de borne parfaitement compatible avec la demande, la centrale 14 engage un dialogue avec le véhicule 10 afin de déterminer si certaines contraintes de la demande de réservation peuvent être modifiées. Par exemple, la centrale 14 peut proposer une borne qui n'est pas dans le périmètre géographique souhaité, mais qui en est proche. De même, la centrale 14 peut proposer une plage horaire différente de celle souhaitée, ou suggérer une recharge partielle des batteries.

Une fois qu'elle a identifié une borne de recharge acceptable par le véhicule 10, la centrale 14 envoie au véhicule une réponse positive REP.

La réponse comporte en particulier des données d'accès ACC nécessaires pour ouvrir l'accès à la borne, et en particulier un code d'accès.

Dans un mode de réalisation, la centrale 14 et la borne 12 sont initialement programmées pour qu'un code d'accès soit généré, à chaque demande de réservation (« *running code »*) par la centrale 14 et que la borne 12 soit à même de vérifier que le code d'accès reçu d'un véhicule 10 est bien un code généré par la centrale 14.

Les données d'accès comportent également des informations sur la borne sélectionnée, par exemple des informations relatives à l'identification et/ou l'emplacement de la borne et/ou à des conditions spécifiques de la borne, par exemple la nécessité d'ouvrir un portail pour accéder à la borne, et sur la plage horaire pendant laquelle l'accès à la borne sera ouvert au véhicule 10.

Dans un mode de réalisation, la réponse de la centrale 14 au véhicule 10 comporte également des informations sur les autres demandes de réservation de la borne 12, en particulier immédiatement avant et/ou après la plage horaire affectée au véhicule 10. Le propriétaire du véhicule 10 peut donc agir en conséquence, par exemple ne pas chercher à rejoindre la borne 12 avant la plage horaire qui lui est affectée, voire laisser son véhicule à la borne 12 lorsque le chargement est terminé.

Dans un mode de réalisation préféré, la centrale 14 informe le véhicule 10, de préférence en temps réel, de toute modification du planning relative à la borne 12, en particulier quand un autre véhicule a réservé une plage horaire immédiatement avant ou immédiatement après celle du véhicule 10.

Si la centrale 14 constate que la demande de réservation émane d'un véhicule 10 qui n'est pas abonné au service, ou si la centrale 14 ne parvient pas à trouver une borne répondant à la demande, même modifiée suite au dialogue avec le véhicule, la centrale 14 envoie une réponse négative NEG au véhicule 10, pour lui signifier l'échec.

**A l'étape** b), le véhicule 10 arrive à proximité de la borne 12 sélectionnée. Il envoie à la borne 12 les données d'accès ACC. Les données d'accès comportent en particulier le code d'accès que la borne 12 analyse afin de déterminer la validité du code d'accès, mais également, de préférence, la plage horaire et/ou la durée pendant laquelle elle doit ouvrir l'accès à l'énergie électrique.

Selon l'invention, les échanges entre le véhicule 10 et la borne 12 sont effectués au moyen d'une communication sans fil, autonome, c'est-à-dire ne nécessitant pas le recours à d'autres moyens, comme un relais téléphonique ou un satellite. Autrement dit, le véhicule 10 et la borne 12 peuvent dialoguer, même dans un environnement isolé, en zone blanche.

Dans un mode de réalisation préféré, la communication électromagnétique locale utilisée est possible lorsque le véhicule est à plus 0,5 m, de préférence plus de 1 m, de préférence plus de 5 m de la borne. En particulier, la communication électromagnétique locale utilisée n'est de préférence pas une communication du type NFC (« *Near Field Communication »*).

De préférence, la communication électromagnétique locale est à une fréquence comprise entre 2400 et 2500 MHz ou entre 5000 et 6000 MHz, de préférence une communication Bluetooth^{®} ou W1F1.

La communication électromagnétique locale peut être également par ondes lumineuses, de préférence une communication Lifi (« Light Fidelity »), de préférence par transmission d'ondes présentant une longueur d'onde comprise entre 480 nm et 650 nm.

La communication électromagnétique locale peut également combiner plusieurs types de communication, par exemple WIFI/Bluetooth^{®}.

Une communication Bluetooth^{®} est préférée entre toutes.

Si la borne valide la demande d'accès, elle ouvre l'accès à de l'énergie électrique fournie par un socle de prise de la borne. Elle peut par exemple fermer un circuit afin d'alimenter électriquement le socle de prise. De préférence, le socle de prise est alimenté en permanence et l'ouverture de l'accès résulte d'une ouverture d'une barrière au socle de prise. Par exemple, une trappe peut s'ouvrir.

Dans un mode de réalisation, l'ouverture de l'accès se traduit notamment par une ouverture d'un portail ou d'une barrière, ce qui est notamment utile pour limiter l'accès chez un particulier.

Le véhicule 10 peut alors se connecter au socle de prise afin de recharger ses batteries. Dans un mode de réalisation préféré, les données d'accès fixent ou permettent à la borne de fixer non seulement une heure du début du chargement, mais également une heure de fin. Avantageusement, la centrale 14 peut ainsi gérer « en avance » les demandes de réservation par d'autres véhicules souhaitant utiliser la borne 12.

Si, en réponse à la demande d'accès ACC, le véhicule 10 ne reçoit aucune réponse ou reçoit un refus d'accès (REF), il en informe la centrale 14 dès que la communication est possible. La centrale 14 peut alors effectuer un diagnostic et/ou contacter le propriétaire de la borne 12 afin qu'il en vérifie le bon fonctionnement.

**A l'étape** c) , par exemple dans les 5 minutes, de préférence dans la minute qui suit la phase de chargement, de préférence encore immédiatement à la fin du chargement, voire avant la fin du chargement, la borne 12 transmet au véhicule 10 des données de chargement CHA, de préférence par Bluetooth^{®}.

Les données de chargement comprennent en particulier de l'information sur les conditions du chargement, par exemple sur l'heure de début et l'heure de fin du chargement, sur la quantité d'énergie chargée dans le véhicule, ou sur des problèmes particuliers, comme une interruption de l'alimentation.

Dans un mode de réalisation préféré, les données de chargement comprennent également une ou plusieurs images, par exemple des photos ou films, du véhicule 10 et/ou d'un ou plusieurs véhicules s'étant présentés, avant le véhicule 10, sur la place de chargement, c'est-à-dire à l'endroit sur lequel un véhicule doit se positionner pour être rechargé par la borne 12. De préférence, ces images sont acquises par la borne 12 à intervalles réguliers et/ou lorsqu'un véhicule 10 a demandé un accès à de l'énergie électrique.

Les données de chargement sont enregistrées dans le véhicule 10.

**A l'étape** d) le véhicule 10 transmet à la centrale 14 tout ou partie des données de chargement CHA. De préférence, la transmission est effectuée dès qu'elle est possible, c'est-à-dire dès que le véhicule est à même de communiquer avec la centrale 14, de préférence par le réseau de téléphonie mobile, par exemple GSM. La centrale 14 peut en particulier utiliser les données de chargement CHA pour facturer le véhicule 10 et rémunérer le propriétaire de la borne 12.

Lorsque les données de chargement comportent des images, la centrale 14 peut également vérifier que le véhicule 10 qui a été rechargé est bien celui qui était prévu et/ou que la place de rechargement n'a pas été utilisée de manière impropre, par exemple par des véhicules thermiques.

La centrale peut également exploiter les images à des fins statistiques, notamment pour décider de modifier l'accès à la place de chargement. Par exemple, si la centrale constate que la place de chargement est souvent occupée par des véhicules thermiques, elle peut décider d'ajouter une barrière, de préférence commandée par la borne, limitant l'accès à la place de chargement aux seuls véhicules autorisés.

Par ailleurs, la borne 12 peut transmettre au véhicule 10 des informations complémentaires COM pour que le véhicule 10 en informe la centrale 14. Les données complémentaires peuvent en particulier comprendre des informations relatives au fonctionnement de la borne 12, et en particulier relatives à son bon fonctionnement.

Comme cela apparaît clairement à présent, un procédé selon l'invention permet avantageusement à un véhicule de réserver une borne, en utilisant un réseau de communication de téléphonie mobile, puis d'accéder à cette borne sans que ni le véhicule, ni la borne aient besoin de consulter la centrale 14. Ce procédé utilise avantageusement un réseau de téléphonie mobile pour établir le dialogue entre le véhicule et la centrale d'une part, et un réseau de proximité, de type Bluetooth^{®}, pour établir le dialogue entre le véhicule et la borne. Ce procédé est donc particulièrement flexible.

L'invention n'est cependant pas limitée aux modes de réalisation qui viennent d'être décrits.

Notamment, dans un autre mode de réalisation, aucune information sur les heures d'accès n'est fournie au véhicule 10. Ce dernier ne reçoit qu'un code d'accès susceptible d'être accepté par la borne 12 et peut se présenter à la borne 12 à tout instant. De préférence, si l'accès la borne 12 n'est pas possible immédiatement, la borne 12 en informe cependant le véhicule, de préférence en lui indiquant l'heure à partir de laquelle il pourra accéder à la borne. La borne 12 ne gère cependant pas la plage horaire pendant laquelle elle est accessible. Il existe donc un risque qu'un autre véhicule que celui qui était programmé se présente à la borne 12. Ce mode de réalisation n'est donc pas préféré.

Dans un mode de réalisation particulier, les données d'accès ACC fournissent un accès à la borne 12 sans limiter la durée de cet accès. La borne 12 est alors inaccessible tant que la centrale 14 n'a pas reçu des données de chargement CHA l'informant de la fin du rechargement du véhicule 10. La centrale 14 utilise les données de chargement pour mettre à jour le planning. Aucune réservation de la borne 12 n'est alors possible tant que la borne 12 n'est pas libre. Ce mode de réalisation n'est pas non plus préféré.

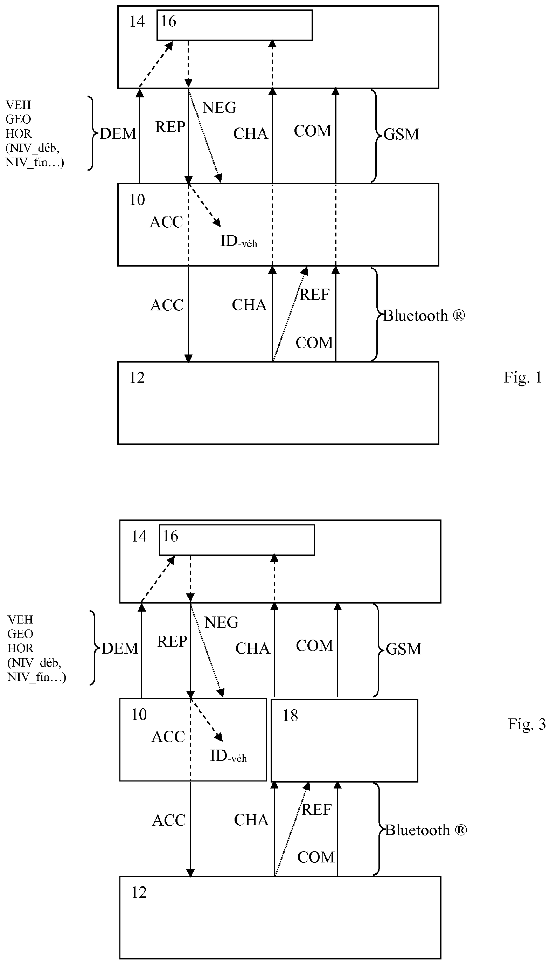

Par ailleurs, à l'étape c), les données de chargement CHA et/ou les informations complémentaires COM peuvent être transmises par la borne à un autre véhicule 18 (figure 3), en particulier à un véhicule 18 qui se présente ultérieurement à la borne. C'est alors le véhicule 18 qui, à l'étape d), transmet à la centrale 14 tout ou partie des données de chargement CHA ou des informations complémentaires COM, ce qui particulièrement avantageux lorsque le véhicule 10 est dans l'incapacité d'effectuer cette transmission, par exemple parce que le téléphone mobile du conducteur du véhicule 10 est déchargé.

### Borne de rechargement

Dans des aspects qui ne font pas partie de l'objet revendiqué, l'invention concerne également une borne de rechargement électrique comportant :
- un socle de prise 20 destiné à être alimenté par le réseau électrique et à fournir de l'énergie électrique à un véhicule électrique ;
- un boîtier 22 destiné à être fixé sur le sol ou sur un mur;
- un support 24 sur lequel le socle de prise est fixé ou intégré, mobile par rapport au boîtier entre une position protégée et une position exposée dans lesquelles l'accès au socle de prise est ouvert (autorisé) et fermé (interdit), respectivement ;
- des moyens d'entraînement 26 du support entre les positions protégée et exposée ;
- un module de commande 27 des moyens d'entraînement.

Le socle de prise 20 peut être constitué de tout socle de prise conventionnel adapté au rechargement de véhicules électriques. Dans le mode de réalisation représenté, le socle de prise 20 est intégré dans un support 24 de forme générale hémisphérique d'axe Y.

Le boîtier 22 peut être en un matériau polymère, par exemple en polycarbonate.

De préférence, le boîtier est destiné à être fixé en aérien, c'est-à-dire à ne pas être enterré.

Il comporte, dans le mode de réalisation représenté, une platine de fixation 28 destinée à être fixée rigidement sur un mur, par exemple au moyen de vis, et un capot 30 en forme de dôme sur lequel la platine de fixation peut être fixée. Le capot 30 présente une première ouverture 32 et une deuxième ouverture 34, d'axe Y.

La platine de fixation 28 est fixée, de manière amovible, par exemple vissée, sur le capot 30, de manière à obturer une première ouverture 32 du capot 30. Elle comporte un orifice 29 par lequel un câble 31 d'alimentation électrique du socle de prise 20 peut sortir du capot 30.

De préférence, le support 24 est mobile en rotation, sur le boîtier, autour d'un axe X entre une position protégée et exposée.

De préférence, l'axe X passe sensiblement par le centre du support. De préférence encore, la forme générale de la surface extérieure du support est de révolution autour de l'axe X. De préférence, la forme générale de la surface extérieure du support est cylindrique d'axe X ou présente la forme d'une sphère, l'axe X passant par le centre de ladite sphère.

La distance entre l'axe X et l'ouverture 34 est de préférence supérieure à 3 cm, à 4 cm, à 5 cm ou à 6 cm et/ou inférieure à 10 cm.

Dans un mode de réalisation, l'axe X coupe l'axe Y et lui est perpendiculaire.

Le support 24 est de préférence agencé de manière à obturer la deuxième ouverture 34 quelle que soit la position angulaire du support par rapport au boîtier. Le contenu du capot est ainsi toujours isolé de l'environnement extérieur, et en particulier des intempéries.

Le support 24 peut être en particulier de forme générale sensiblement complémentaire à celle du boîtier, au moins localement autour de la deuxième ouverture 34. Par exemple, le support 24 peut être cylindrique ou sphérique si le boîtier est cylindrique ou sphérique à proximité de la deuxième ouverture 34.

De préférence encore, en position protégée, le socle de prise 20 est séparé de l'environnement extérieur par un bouclier de protection contre les chocs, de préférence constitué par le support 24.

Le bouclier peut être constitué en un matériau déformable plastiquement ou élastiquement, par exemple en ABS, en PVC ou en polycarbonate. Une déformation élastique permet avantageusement au bouclier de reprendre sa forme après un choc, ce qui limite la maintenance.

Le bouclier peut comporter des nervures de rigidification.

De préférence, dans la position protégée, le socle de prise est écarté de la surface extérieure 23 du boîtier exposée à l'environnement lorsque le boîtier est fixé sur le mur ou sur le sol, d'une distance supérieure à 2 cm, de préférence supérieure à 5 cm, de préférence supérieure à 7 cm, de préférence supérieure à 10 cm. Le bouclier peut présenter une épaisseur supérieure à 0,5 cm, de préférence supérieure à 1 cm, de préférence encore supérieure à 2 cm.

Dans un mode de réalisation préféré, comme représenté, le bouclier s'étend, au moins en partie, à l'opposé du socle de prise par rapport à l'axe de rotation du support. La protection en est maximisée.

De préférence, un organe opérationnel différent du socle de prise 20 est fixé sur le support. De préférence, le support est mobile entre
- la position protégée,
- la position exposée et
- au moins une position opérationnelle, différente de la position exposée, dans laquelle l'accès, par l'ouverture 34, audit organe opérationnel est ouvert, c'est-à-dire dans laquelle l'organe opérationnel peut être utilisé.

L'organe opérationnel peut être par exemple un appareil d'acquisition d'images, un antivol pour vélo ou moto, un deuxième socle de prise adapté pour fournir un courant électrique différent du socle de prise 20, par exemple adapté pour fournir un courant électrique pour le rechargement d'un vélo ou d'une moto électrique, un compartiment, un coffre-fort, dans lequel des clés, par exemple des clés de voiture, peuvent être placées, un clavier, par exemple permettant la saisie d'un identifiant ou d'un code d'accès, un écran, en particulier un écran tactile, une base de communication munie d'une antenne, par exemple pour une communication de type RFID ou NFC.

La borne offre ainsi un accès sécurisé, par exemple à des clés ou à un code d'accès. Elle peut être ainsi notamment utilisée lorsque le véhicule est en libre-service, chaque utilisateur pouvant par exemple récupérer les clés dans le coffre-fort de la borne, puis, après avoir utilisé le véhicule, les remettre dans le coffre-fort de la borne ou d'une autre borne.

Les clés peuvent être chacune munies d'un transpondeur afin que la borne détecte la présence ou l'absence des clés dans le coffre-fort. Avantageusement, il est ainsi possible d'identifier l'instant auquel les clés ont été extraites du coffre-fort et/ou remises dans le coffre-fort.

De préférence, l'organe opérationnel est commandé par le module de commande. Par exemple, le module de commande permet de déclencher l'acquisition d'une image avec l'appareil d'acquisition d'images, et/ou commande un verrouillage et/ou un déverrouillage de l'anti-vol, et/ou commande la fourniture d'énergie électrique par le deuxième socle de prise, et/ou commande un verrouillage et/ou un déverrouillage du coffre-fort et/ou commande les interactions avec le clavier ou l'écran tactile ou la base de communication.

De préférence, le support est mobile entre au moins deux positions opérationnelles dans lesquelles l'accès, par l'ouverture 34, à des organes opérationnels respectifs fixés sur le support est ouvert. De préférence, dans une position opérationnelle dans laquelle l'accès, par l'ouverture 34, à un organe opérationnel est ouvert, l'accès, par ladite ouverture 34, à un autre organe opérationnel, de préférence à tout autre organe opérationnel, est fermé.

De préférence, dans la position exposée, dans la position protégée, et dans l'une quelconque des positions opérationnelles, l'obturation de l'ouverture 34 empêche l'entrée de pluie à l'intérieur du boîtier, entre le bord de l'ouverture 34 et le support.

Les positions opérationnelles sont de préférence prédéfinies.

De préférence encore, dans la position protégée, l'accès, par l'ouverture 34, à un quelconque organe opérationnel est fermé. Avantageusement, la position protégée permet ainsi de protéger tous les organes opérationnels, notamment du vandalisme. La forme cylindrique ou sphérique du support est particulièrement adaptée.

Un organe opérationnel peut être, en particulier, un appareil d'acquisition d'images 35, par exemple un appareil photo ou une caméra fixé sur le support 24. En fonction de la position angulaire du support, l'appareil d'acquisition d'images est ainsi mobile entre une position opérationnelle, ou « position d'acquisition d'images », dans laquelle il peut acquérir une image à travers la deuxième ouverture 34, et une position rangée, dans laquelle il est protégé à l'intérieur du boîtier 22.

De préférence, l'appareil d'acquisition d'images 35 est pourvu d'un logiciel d'analyse spectrale. De préférence, il est équipé d'un capteur infra-rouge.

De préférence, l'appareil d'acquisition d'images 35 est pourvu d'un logiciel d'analyse des images acquises, adapté pour identifier la marque et/ou le type de véhicule représenté sur les images acquises. De préférence, dans la position rangée de l'appareil d'acquisition, le socle de prise est dans sa position protégée.

Les moyens d'entraînement 26 comportent classiquement un moteur 36, de préférence électrique, et un ensemble d'organes de transmission, comme une vis sans fin 38, couplée au moteur 36, et une roue dentée 40 d'axe X couplée à la vis sans fin et fixée rigidement sur le support 24.

De préférence, le module de commande 27 est configuré pour commander les moyens d'entraînement 26 de manière à déplacer chaque organe opérationnel entre la position opérationnelle respective et une position rangée respective dans lesquelles l'organe opérationnel est exposé et isolé de l'environnement extérieur au boîtier, respectivement. Dans les positions opérationnelle et rangée, l'accès à l'organe opérationnel, par l'ouverture 24, est donc ouvert et fermé, respectivement.

De préférence, les moyens de commande 27 sont configurés pour n'autoriser que des positionnements du support par rapport au boîtier dans les positions protégée et exposée, ou, lorsque le support porte un ou plusieurs organes opérationnels, pour n'autoriser que des positionnements du support par rapport au boîtier dans les positions protégée, exposée, opérationnelle(s) et rangée(s).

Le module de commande 27 est de préférence configuré pour commander les moyens d'entraînement 26 de manière à déplacer l'organe opérationnel exclusivement entre des positions prédéfinies. Le nombre de positions prédéfinies est de préférence inférieur à 10, de préférence inférieur à 8, de préférence inférieur à 6, de préférence inférieur à 5, et/ou supérieur à 2, de préférence supérieur à 3.

Le module de commande 27 comporte un émetteur récepteur apte à dialoguer avec le véhicule 10, de préférence en Bluetooth^{®}, et un processeur configuré de manière à commander les moyens d'entraînement 26 en fonction dudit dialogue et, de préférence commander le fonctionnement des organes opérationnels, et en particulier le déclenchement de l'appareil d'acquisition d'images 35.

Le fonctionnement de la borne de rechargement découle directement de la description qui précède.

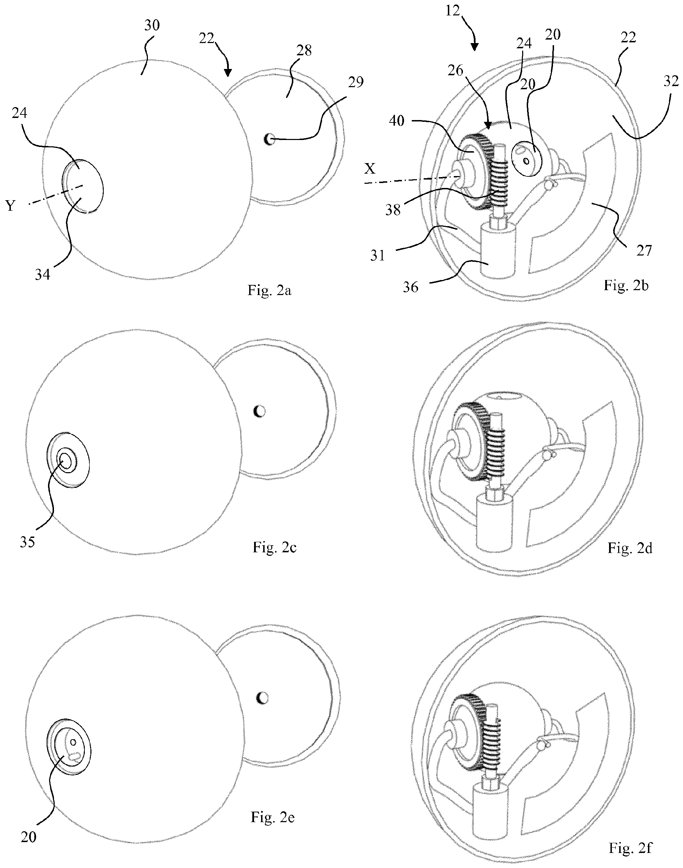

Initialement, le support 24 est dans la position protégée représentée sur les figures 2a et 2b. La surface extérieure du support qui s'étend à l'opposé du socle de prise 20 par rapport à l'axe X obture la deuxième ouverture 34. Le socle de prise et l'appareil d'acquisition d'images optionnel sont donc isolés de l'environnement extérieur, et en particulier des intempéries. L'appareil d'acquisition d'images 35 est par ailleurs avantageusement à l'abri du vandalisme, et en particulier d'une projection de peinture.

En outre, en cas de choc sur le capot 30, le socle de prise et l'appareil d'acquisition d'images optionnel sont bien protégés. En particulier le socle de prise est avantageusement à distance de la surface extérieure 23 du capot 30.

Enfin, aucun accès au courant électrique disponible au socle de prise 20 n'est possible depuis l'extérieur du capot 30.

A intervalles réguliers, le module de commande active le moteur 36 de manière à entrainer la rotation du support 24 autour de l'axe X jusqu'à la position d'acquisition, en l'occurrence une rotation de + 90°. L'objectif de l'appareil d'acquisition fait alors face à la deuxième ouverture 34, de préférence en l'affleurant, sans en faire saillie (Fig. 2c).

Le module de commande déclenche ensuite l'acquisition d'au moins une image. De préférence, la borne 12 est disposée de manière que l'image représente une plaque d'immatriculation d'un véhicule éventuellement présent sur la place de chargement.

De préférence, dès que l'image a été acquise, le module de commande active le moteur 36 de manière à entrainer la rotation du support 24 autour de l'axe X jusqu'à la position rangée, en l'occurrence une rotation de -90° ou de + 270°. L'objectif de l'appareil d'acquisition ne fait alors plus face à la deuxième ouverture 34 et n'est donc plus exposé à l'environnement extérieur du boîtier.

Suite au dialogue avec le véhicule, le module de commande active le moteur 36 de manière à entrainer la rotation du support 24 autour de l'axe X jusqu'à la position exposée (figures 2e et 2f). Le socle de prise est alors apparent à travers la deuxième ouverture 34. De préférence, il affleure la deuxième ouverture 34 et, de préférence encore l'obture. De préférence, il ne fait pas saillie de la deuxième ouverture 34, ce qui limite les risques de dégradation.

Le véhicule peut donc accéder à l'énergie électrique pour se recharger.

Préalablement à la rotation du support jusqu'à la position exposée, le module de commande 27 commande de préférence l'acquisition d'une image afin d'identifier le véhicule 10. De préférence, il commande le moteur 36 jusqu'à ce que l'appareil d'acquisition atteigne la position d'acquisition, déclenche l'acquisition de l'image, puis commande le moteur 36 jusqu'à ce que le socle de prise atteigne la position exposée.

En fin de rechargement, le module de commande active à nouveau le moteur 36 de manière à entrainer la rotation du support 24 autour de l'axe X jusqu'à la position protégée initiale.

Comme cela apparaît clairement à présent, une borne de rechargement selon l'invention permet de restreindre l'accès au socle de prise, tout en assurant une protection du socle de prise lorsqu'il n'est pas utilisé.

De préférence encore, une borne de rechargement selon l'invention permet d'acquérir une image et de la transmettre à la centrale par l'intermédiaire du véhicule, comme les données de chargement. Plus précisément, l'image est envoyée par le réseau de communication local, de préférence par Bluetooth^{®}, au véhicule et ce dernier la retransmet à la centrale 14 lorsqu'il a accès à un réseau de téléphonie mobile, en particulier GSM.

Une borne de rechargement selon l'invention est donc bien adaptée pour être fixée chez un particulier, avec un accès possible depuis la rue. Elle est efficace même si la borne n'est pas abonnée à un réseau de téléphonie mobile ou est en zone blanche et ne peut donc accéder à un tel réseau.

L'invention concerne aussi un dispositif comportant plus de 10 ou plus de 100 emplacements pour véhicule, par exemple un parking, en particulier un parking couvert, chaque emplacement étant pourvu d'une borne de rechargement selon l'invention, le dispositif comportant :
- des moyens de détection d'un véhicule, par exemple d'un véhicule entrant dans le parking, et
- des moyens d'indication d'un emplacement au conducteur dudit véhicule, en particulier pour qu'il s'y gare, en communication avec lesdits moyens de détection.

Les moyens de détection peuvent en particulier comporter une caméra pourvue d'un logiciel d'analyse d'images apte à détecter, sur une image acquise par la caméra, un véhicule, et de préférence apte à identifier le type de véhicule représenté sur ladite image acquise et/ou un identifiant dudit véhicule. Dans un mode de réalisation, ces moyens sont intégrés dans au moins une borne de rechargement selon l'invention.

Les moyens pour indiquer au conducteur dudit véhicule un emplacement sont en communication avec les moyens de détection. Ils comportent de préférence un logiciel adapté pour
- recevoir une requête des moyens de détection pour rechercher un emplacement pour un véhicule détecté,
- rechercher en conséquence un emplacement, en particulier un emplacement libre adapté au véhicule détecté, la recherche étant de préférence en fonction d'un identifiant du véhicule détecté,
- après avoir trouvé un emplacement, commander un indicateur intégré dans la borne de rechargement de l'emplacement trouvé.

L'indicateur peut être lumineux ou sonore. Il peut être en particulier adapté pour diffuser un message vocal, une musique ou une alarme.

Dans un mode de réalisation, les moyens d'indication sont intégrés dans au moins une borne de rechargement selon l'invention.

Dans un mode de réalisation, l'indicateur n'est activé que lorsque le véhicule approche de la borne de rechargement, par exemple lorsqu'il est à moins de 100 m, voire à moins de 50 m ou à moins de 10 m de la borne de rechargement.

Les emplacements ne sont pas nécessairement dans un parking. Ils peuvent par exemple être disséminés dans une ville.

## Revendications

1. Procédé d'exploitation d'un parc de bornes (12) destinées au rechargement en énergie électrique d'un ensemble des véhicules automobiles (10), le procédé comportant les étapes successives suivantes :
a) réservation, par un premier véhicule, d'une borne auprès d'une centrale (14) de réservation, suivant les étapes suivantes :
a1) demande de réservation (DEM), par le premier véhicule, auprès de la centrale, la demande de réservation fixant des contraintes (GEO, HOR) ;
a2) vérification par la centrale, dans un planning (16), de la disponibilité d'une borne répondant aux dites contraintes ;
a3) si une borne répondant aux contraintes est disponible, transmission, par la centrale au premier véhicule, d'une réponse positive (REP) comportant des données d'accès (ACC) à la borne, mise à jour du planning et enregistrement des données d'accès dans une mémoire du premier véhicule ; sinon, transmission, par la centrale au premier véhicule, d'une réponse négative (NEG) à la demande de réservation ;
b) si le premier véhicule a reçu une réponse positive à la demande de réservation, lorsque le premier véhicule est à moins de 100 mètres de la borne, demande d'accès, par le premier véhicule à la borne, la demande d'accès comportant les étapes successives suivantes :
b1) transmission des données d'accès, du premier véhicule à la borne ;
b2) vérification des données d'accès par la borne ;
b3) si les données d'accès sont correctes, fourniture, par la borne, d'un accès à de l'énergie électrique disponible sur un socle de prise de la borne ; sinon, transmission, de la borne au premier véhicule, d'un refus d'accès (REF), la communication entre le premier véhicule et la borne étant une communication électromagnétique seulement possible lorsque le premier véhicule est à moins de 100 m de la borne ;
c) en fin de chargement, transmission de données de chargement (CHA), de la borne au premier véhicule et à un deuxième véhicule qui se présente ultérieurement à la borne, et enregistrement des données de chargement dans la mémoire dudit premier véhicule et dans une mémoire du deuxième véhicule, respectivement ;
d) transmission des données de chargement du premier véhicule ou du deuxième véhicule, lorsque le premier véhicule est dans l'incapacité d'effectuer cette transmission, respectivement, à la centrale, et mise à jour de la base de données centrale avec les données de chargement.

2. Procédé selon la revendication immédiatement précédente, dans lequel la communication électromagnétique locale est à une fréquence comprise entre 2400 et 2500 MHz.

3. Procédé selon l'une quelconque des revendications précédentes, dans lequel la communication électromagnétique locale est une communication Bluetooth^{®}.

4. Procédé selon l'une quelconque des revendications précédentes, dans lequel, à l'étape a), la réservation de la borne auprès de la centrale (14) de réservation est effectuée au moyen du réseau téléphonique hertzien.

5. Procédé selon l'une quelconque des revendications précédentes, dans lequel la borne est localisée dans une zone blanche non couverte par un réseau de téléphonie mobile.

6. Procédé selon l'une quelconque des revendications précédentes, dans lequel le parc de bornes comporte plus de 5 000 bornes.

7. Procédé selon l'une quelconque des revendications précédentes, dans lequel, à l'étape a), l'identification d'une borne pour satisfaire la demande de réservation dépend
- d'une contrainte (GEO) relative à l'emplacement géographique de la borne, et
- d'une contrainte (HOR) relative au moment du rechargement de batterie du premier véhicule.

8. Procédé selon la revendication immédiatement précédente, dans lequel l'identification d'une borne pour satisfaire la demande de réservation dépend encore
- d'une contrainte relative à un niveau de charge des batteries (NIV_déb) du premier véhicule au moment où la centrale évalue que le premier véhicule (10) arrivera à la borne (12), et/ou
- d'une contrainte relative à un niveau de charge demandé par le premier véhicule en fin du rechargement (NIV_fin).

9. Procédé selon l'une quelconque des revendications précédentes, dans lequel, à l'étape a), si la centrale (14) ne trouve pas de borne répondant à la demande de réservation, la centrale (14) propose des modifications d'au moins une contrainte fixée par la demande de réservation (DEM).

10. Procédé selon l'une quelconque des revendications précédentes, dans lequel la centrale (14) génère un code d'accès à chaque demande de réservation, et la borne (12) est configurée pour contrôler la validité du code d'accès reçu du premier véhicule (10).

11. Procédé selon l'une quelconque des revendications précédentes, dans lequel la centrale (14) informe le premier véhicule d'autres demandes de réservation de la borne réservée par le premier véhicule.

12. Procédé selon l'une quelconque des revendications précédentes, dans lequel la communication électromagnétique locale utilisée est possible lorsque le premier véhicule est à plus 0,5 m de la borne.

13. Procédé selon l'une quelconque des revendications précédentes, dans lequel les données de chargement comportent une image acquise par la borne de chargement.

## Patentansprüche

1. Verfahren zur Nutzung eines Bestands von zum Aufladen einer Gruppe von Kraftfahrzeugen (10) mit elektrischer Energie bestimmten Stationen (12), wobei das Verfahren die folgenden aufeinanderfolgenden Schritte aufweist:
a) Reservierung einer Station bei einer Reservierungszentrale (14) durch ein erstes Fahrzeug gemäß den folgenden Schritten:
a1) Reservierungsantrag (DEM) bei der Zentrale durch das erste Fahrzeug, wobei der Reservierungsantrag Bedingungen (GEO, HOR) festlegt;
a2) Überprüfung der Verfügbarkeit einer den Bedingungen entsprechenden Station in einem Terminplan (16) durch die Zentrale;
a3) wenn eine den Bedingungen entsprechende Station zur Verfügung steht, Übertragung einer positiven Antwort (REP) von der Zentrale an das erste Fahrzeug, die Zugangsdaten (ACC) zur Station aufweist, Aktualisierung des Terminplans und Speichern der Zugangsdaten in einem Speicher des ersten Fahrzeugs; sonst, Übertragung einer negativen Antwort (NEG) auf den Reservierungsantrag von der Zentrale an das erste Fahrzeug;
b) wenn das erste Fahrzeug eine positive Antwort auf den Reservierungsantrag empfangen hat, wenn das erste Fahrzeug sich weniger als 100 Meter von der Station befindet, Zugangsantrag zur Station durch das erste Fahrzeug, wobei der Zugangsantrag die folgenden aufeinanderfolgenden Schritte aufweist:
b1) Übertragung der Zugangsdaten vom ersten Fahrzeug an die Station;
b2) Überprüfung der Zugangsdaten durch die Station;
b3) wenn die Zugangsdaten korrekt sind, Bereitstellung eines Zugangs zur an einem Steckdosensockel der Station verfügbaren elektrischen Energie durch die Station; sonst Übertragung einer Zugangsverweigerung (REF) von der Station an das erste Fahrzeug, wobei die Kommunikation zwischen dem ersten Fahrzeug und der Station eine elektromagnetische Kommunikation ist, die nur möglich ist, wenn das erste Fahrzeug weniger als 100 m von der Station entfernt ist;
c) am Ende des Ladevorgangs, Übertragung von Ladedaten (CHA) von der Station an das erste Fahrzeug und an ein zweites Fahrzeug, das später an der Station erscheint, und Speichern der Ladedaten im Speicher des ersten Fahrzeugs bzw. in einem Speicher des zweiten Fahrzeugs;
d) Übertragung der Ladedaten vom ersten Fahrzeug bzw. vom zweiten Fahrzeug, wenn das erste Fahrzeug unfähig ist, diese Übertragung auszuführen, an die Zentrale, und Aktualisierung der zentralen Datenbank mit den Ladedaten.

2. Verfahren nach dem unmittelbar vorhergehenden Anspruch, wobei die lokale elektromagnetische Kommunikation auf einer Frequenz zwischen 2400 und 2500 MHz ist.

3. Verfahren nach einem der vorhergehenden Ansprüche, wobei die lokale elektromagnetische Kommunikation eine Bluetooth^{®}-Kommunikation ist.

4. Verfahren nach einem der vorhergehenden Ansprüche, wobei im Schritt a) die Reservierung der Station bei der Reservierungszentrale (14) mittels des Funktelefonnetzes ausgeführt wird.

5. Verfahren nach einem der vorhergehenden Ansprüche, wobei die Station sich in einem Funkloch befindet, das nicht von einem Mobilfunknetz abgedeckt wird.

6. Verfahren nach einem der vorhergehenden Ansprüche, wobei der Bestand von Stationen mehr als 5 000 Stationen aufweist.

7. Verfahren nach einem der vorhergehenden Ansprüche, wobei im Schritt a) die Identifizierung einer Station, um dem Reservierungsantrag nachzukommen, abhängt von
- einer Bedingung (GEO) bezüglich des geographischen Standorts der Station, und
- einer Bedingung (HOR) bezüglich des Batterieladezeitpunkts des ersten Fahrzeugs.

8. Verfahren nach dem unmittelbar vorhergehenden Anspruch, wobei die Identifizierung einer Station, um dem Reservierungsantrag nachzukommen, noch abhängt von
- einer Bedingung bezüglich eines Ladezustands der Batterien (NIV_déb) des ersten Fahrzeugs zu dem Zeitpunkt, zu dem die Zentrale schätzt, dass das erste Fahrzeug (10) an der Station (12) ankommen wird, und/oder
- einer Bedingung bezüglich eines vom ersten Fahrzeug am Ende des Aufladens (NIV_fin) angeforderten Ladezustands.

9. Verfahren nach einem der vorhergehenden Ansprüche, wobei im Schritt a), wenn die Zentrale (14) keine Station findet, die dem Reservierungsantrag entspricht, die Zentrale (14) Änderungen mindestens einer vom Reservierungsantrag (DEM) festgelegten Bedingung vorschlägt.

10. Verfahren nach einem der vorhergehenden Ansprüche, wobei die Zentrale (14) bei jedem Reservierungsantrag einen Zugangscode generiert, und die Station (12) konfiguriert ist, die Gültigkeit des vom ersten Fahrzeug (10) empfangenen Zugangscodes zu kontrollieren.

11. Verfahren nach einem der vorhergehenden Ansprüche, wobei die Zentrale (14) das erste Fahrzeug über andere Reservierungsanträge der vom ersten Fahrzeug reservierten Station informiert.

12. Verfahren nach einem der vorhergehenden Ansprüche, wobei die verwendete lokale elektromagnetische Kommunikation möglich ist, wenn das erste Fahrzeug mehr als 0,5 m von der Station entfernt ist.

13. Verfahren nach einem der vorhergehenden Ansprüche, wobei die Ladedaten ein von der Ladestation erfasstes Bild aufweisen.

## Claims

1. Method for exploiting a network of stations (12) intended to recharge with electrical power a set of motor vehicles (10), the method comprising the following successive steps:
a) a step in which a station is reserved, by a first vehicle, via a reservation center (14), by carrying out the following steps:
a1) a step in which the first vehicle makes a reservation request (DEM), to the center, the reservation request setting constraints (GEO, HOR);
a2) a step in which the center checks, in a schedule (16), the availability of a station meeting said constraints;
a3) if a station meeting the constraints is available, a step in which the center transmits, to the first vehicle, a positive response (REP) comprising access data (ACC) that permit access to the station, updates the schedule and records the access data in a memory of the first vehicle; otherwise, the center transmits, to the first vehicle, a negative response (NEG) to the reservation request;
b) if the first vehicle has received a positive response to the reservation request, when the first vehicle is less than 100 meters from the station, a step in which the first vehicle requests access to the station, the access request comprising the following successive steps:
b1) a step in which the first vehicle transmits the access data to the station;
b2) a step in which the station checks the access data;
b3) if the access data are correct, a step in which the station provides access to the electrical power available via a socket of the station; otherwise, the station transmits an access denial (REF) to the first vehicle, the communication between the first vehicle and the station being an electromagnetic communication, only possible when the first vehicle is less than 100 m from the station;
c) at the end of charging, a step in which the station transmits charging data (CHA) to the first vehicle or to a second vehicle that turns up subsequently at the station, and in which the charging data are stored in the memory of said first vehicle and in a memory of the second vehicle, respectively;
d) a step in which charging data are transmitted from the first vehicle or from the second vehicle, when the first vehicle is unable to perform this transmission, respectively, to the center, and in which the central database is updated with the charging data.

2. Method according to the immediately preceding claim, wherein the local electromagnetic communication is at a frequency comprised between 2400 and 2500 MHz.

3. Method according to either one of the preceding claims, wherein the local electromagnetic communication is a Bluetooth^{®} communication.

4. Method according to any one of the preceding claims, wherein, in step a), the reservation of the station via the reservation center (14) is carried out by means of a cell phone network.

5. Method according to any one of the preceding claims, wherein the station is located in an un-served zone not covered by a cell phone network.

6. Method according to any one of the preceding claims, wherein the network of stations comprises more than 5000 stations.

7. Method according to any one of the preceding claims, wherein, in step a), the identification of a station to satisfy the reservation request depends
- on a constraint (GEO) relating to the geographical location of the station, and
- on a constraint (HOR) relating to the time at which the battery of the first vehicle is to be recharged.

8. Method according to the immediately preceding claim, wherein the identification of a station to satisfy the reservation request further depends
- on a constraint relating to a level of charge (LEV_strt) that the batteries of the first vehicle will have at the time at which the center believes the first vehicle (10) will arrive at the station (12), and/or
- a constraint relating to a level of charge (LEV_end) requested by the first vehicle at the end of the recharging.

9. Method according to any one of the preceding claims, wherein, in step a), if the center (14) is unable to find a station satisfying the reservation request, the center (14) proposes modifications to at least one constraint set by the reservation request (DEM).

10. Method according to any one of the preceding claims, wherein the center (14) generates an access code on each reservation request, and the station (12) is configured to inspect the validity of the access code received from the first vehicle (10).

11. Method according to any one of the preceding claims, wherein the center (14) informs the first vehicle of other requests to reserve the station reserved by the first vehicle.

12. Method according to any one of the preceding claims, wherein the local electromagnetic communication used is possible when the first vehicle is at more than 0.5 m from the station.

13. Method according to any one of the preceding claims, wherein the charging data comprise an image acquired by the charging station.
